# Europäisches Patentamt

## European Patent Office

## Office européen des brevets

(19)

(11) Veröffentlichungsnummer: **0 275 338**
**B1**

(12) **EUROPÄISCHE PATENTSCHRIFT**

(45) Veröffentlichungstag der Patentschrift:
16.08.90

(51) Int. Cl.⁵: **F16C 11/12**

(21) Anmeldenummer: **87100744.9**

(22) Anmeldetag: **20.01.87**

(54) **Biegefedergelenk und Verfahren zu seiner Herstellung.**

(43) Veröffentlichungstag der Anmeldung:
**27.07.88 Patentblatt 88/30**

(45) Bekanntmachung des Hinweises auf die Patenterteilung:
**16.08.90 Patentblatt 90/33**

(84) Benannte Vertragsstaaten:
**AT CH DE ES FR GB IT LI NL SE**

(56) Entgegenhaltungen:
EP-A- 178 662
BE-A- 689 387
US-A- 3 543 301

IEEE TRANSACTIONS ON ELECTRON DEVICES, Band ED-25, Nr. 10, Oktober 1978, Seiten 1241-1250, IEEE, New York, US; K.E. PETERSEN: "Dynamic micromechanics on silicon: techniques and devices"
PATENT ABSTRACTS OF JAPAN, Band 5, Nr. 192 (E-85)[864], 8. Dezember 1981; & JP-A-56 115 532 (FUJITSU K.K.) 10-09-1981
RCA REVIEW, Band 39, Nr. 2, Juni 1978, Seiten 278-308, RCA Corp., Princeton, New York, US; W. KERN: "Chemical etching of silicon, germanium, gallium arsenide, and gallium phosphide"
IEEE TRANSACTIONS ON ELECTRON DEVICES, Band ED-25, Nr. 10, Oktober 1978, Seiten 1178-1185, IEEE, New York, US; E. BASSOUS: "Fabrication of novel three-dimensional microstructures by the anisotropic

(73) Patentinhaber: **LITEF GmbH, Lörracher Strasse 18, D-7800 Freiburg/Br.(DE)**

(72) Erfinder: **Ebert, Wolfram, Dr., Drei-Ähren-Strasse 21, D-7800 Freiburg(DE)**
Erfinder: **Handrich, Eberhard, Dr., Keltenring 104, D-7815 Kirchzarten(DE)**
Erfinder: **Hafen, Martin, Suppengasse 21, D-7210 Rottweil(DE)**
Erfinder: **Ryrko, Bruno, Jahnstrasse 10, D-7809 Denslingen(DE)** ,

(74) Vertreter: **TER MEER - MÜLLER - STEINMEISTER & PARTNER, Mauerkircherstrasse 45, D-8000 München 80(DE)**

(56) Entgegenhaltungen: (Fortsetzung)
etching of (100) and (110) silicon"
LA VIDE , LES COUCHES MINCES, Band 35, Nr. 204, November-Dezember 1980, Société Francaise du vide, Paris, FR; D. DIEUMEGARD: "Pulvérisation et technologies d'érosion ionique"

ACTORUM AG

## Beschreibung

Die Erfindung betrifft ein mikromechanisches Pendel und ein Verfahren zu seiner Herstellung aus selektiv geätztem Siliciumwafermaterial nach dem Oberbegriff der Patentansprüche 1 und 2.

Für viele Anwendungen werden mikromechanische Pendel benötigt, deren Biegefedergelenke einen genau definierten Drehpunkt und eine wohldefinierte Federkonstante aufweisen.

Bekannt ist es für solche Biegefedergelenke flache Metallblattfedern zu verwenden, die aus kaltgewalzten Metallfolien hergestellt werden, die mittels eines Laser-Schweißverfahrens zu einem Schichtverbund verschweißt werden, um die erforderliche Genauigkeit hinsichtlich Drehpunkt und Federkonstante zu erzielen. Bekannt ist es auch, das Biegefederelement durch ein Fräsverfahren aus einem Metallbandmaterial herzustellen, das mittels eines Elektropolierverfahrens auf eine gewünschte Dicke heruntergeätzt wird. Die Herstellungsverfahren für Metallfedern dieser Art sind aufwendig und teuer. Bei Metallfedern in der erwähnten Verbundtechnik ergeben sich Schwierigkeiten aus dem mehrteiligen Schichtaufbau. Weiterhin hat Metall allgemein nicht die erwünschten hohen elastischen Eigenschaften, so daß oft die Streckgrenze erreicht wird. Die in Metallen vorhandene Hysterese beeinträchtigt außerdem die Stabilität der Federvorspannung.

In der Feinwerktechnik und Mikromechanik ist es auch bekannt Biegefederelemente aus Silicium-Einkristallscheiben (Wafern) durch anisotropes Ätzen und Ätzstopptechnik herzustellen, wobei etwa bei der Anwendung für Pendel meist ein Streifen konstanter aber frei wählbarer Breite, Länge und Tiefe quer zur Pendelrichtung in das Wafermaterial eingeätzt wird. Breite, Länge und Tiefe eines solchen Ätzstreifens legen die Genauigkeit der Lage des Pendeldrehpunkts und damit die Pendellänge, die Federkonstante des elastischen Pendelgelenks und die Querachsensteifigkeit des Pendels fest. Im Querschnitt kann der genannte Ätzstreifen des Biegefedergelenks je nach Lage der Kristallachsen z.B. ein trapezförmiges Tal darstellen, dessen Talsohle parallel zur rückwärtigen Waferfläche verläuft; vgl. Fig. 1 der beigefügten Zeichnungen. Ein derartiges Verfahren wird in EP-A 0 178 662 beschrieben.

Dieser Stand der Technik läßt sowohl bei Metallfedern auch bei in mikromechanischer Ätztechnik hergestellten Biegefedern für Pendelaufhängungen höchster Präzision den Wunsch nach Verbesserungen offen. Zwar existieren bei aus Siliciumeinkristallmaterial hergestellten Biegefederelementen die oben erwähnten Hystereseprobleme nicht. Speziell die Lage des Pendeldrehpunkts ist jedoch in diesem Fall nicht genügend genau definierbar und die Querachsensteifigkeit ist zu gering, d.h. die Pendelgelenkresonanzen liegen zu niedrig.

In US-A 3 543 301 wird ein Biegefedergelenk beschrieben, das aus zwei nebeneinander angeordneten, gekreuzten und schräg zu den Hauptflächen eines Gimbals bzw. Kreiselrotors verlaufenden, einstückig mit diesem Gimbal gebildeten Blattfedern besteht. Diese Biegefedergelenke werden aus einer Kupferberyllium-Scheibe durch mechanisches Herausarbeiten V-förmiger Nuten hergestellt.

Derartige Biegefedergelenke weisen zwar einen genau definierten Drehpunkt und eine ausreichende hohe Querachsensteifigkeit auf, allerdings sind die mit dem beschriebenen Herstellungsverfahren erzielbaren Bauteilgrößen nicht dazu geeignet, in einem mikromechanischen Pendel verwendet zu werden.

Die Erfindung liegt damit die Aufgabe zugrunde, ein mikromechanisches Pendel mit einem Biegefedergelenk anzugeben, welches Biegefedergelenk bezüglich der Drehpunktlage, der Federkonstanten und der Querachsensteifigkeit wesentlich höhere Genauigkeitsanforderungen erfüllt als bisher bekannte Biegefedergelenke, die aus selektiv geätztem (Silicium-)Wafermaterial gewonnen werden.

Diese Aufgabe wird bei einem Pendel der eingangs genannten Art erfindungsgemäß dadurch gelöst, daß das Biegefedergelenk (13, 14) aus zwei nebeneinander angeordnete, gekreuzte und schräg zu den Hauptflächen des Wafers (1) verlaufende einstückig mit dem Pendel (10) aus dem Wafer (1) durch selektives Ätzen gewonnene Blattfederelemente (20, 21) besteht, deren jeweilige Dicke bestimmbar ist durch das wenigstens von einer Seite der Blattfederelemente (20, 21) her eindotierte Ätz-Stoppmittel Bor.

Das erfindungsgemäße Verfahren ist im Patentanspruch 2 angegeben.

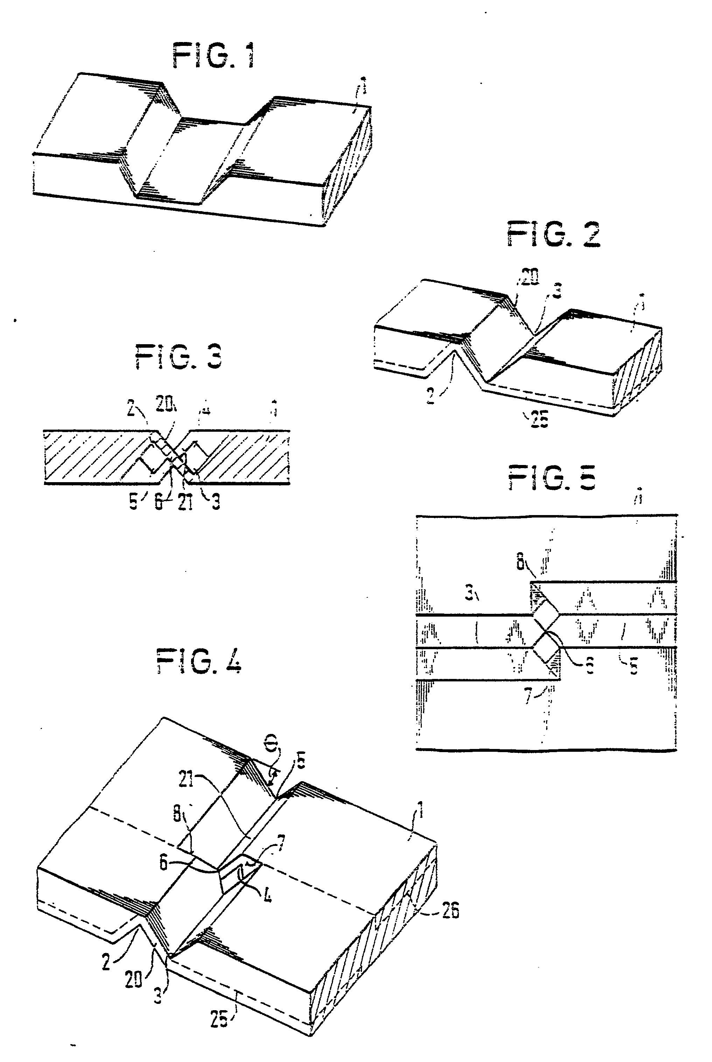

Die Grundidee der Erfindung geht im Prinzip dahin, durch geeignete Wahl der Lage der Kristallachsen des Siliciumeinkristalls relativ zur Waferfläche das Einätzen vom im Querschnitt V-förmigen Streifen oder Nuten quer zur gewünschten Pendelrichtung bis zu einer gewünschten Tiefe vorzunehmen. Durch Ätzen zweier solcher V-förmiger Nuten von beiden Waferseiten her mit geeignetem Versatz, insbesondere unter Anwendung von anisotroper Ätztechnik und von Ätzstopptechnik mittels Dotierung nach photolithographischen Verfahren oder durch Ionenimplantation kann eine schräg zu der Waferfläche verlaufende Blattfeder hergestellt werden, wobei an dieser Stelle bereits auf die Fig. 2 als Anschauungsbeispiel hingewiesen sei.

Die Erfindung und vorteilhafte Einzelheiten werden nachfolgend unter Bezug auf die Zeichnung in beispielsweiser Ausführungsform näher erläutert. Es zeigen:

Fig. 1 ein bereits oben erwähntes Anschauungsbeispiel für ein mikromechanisches Biegefedergelenk, hergestellt aus einem Wafereinkristallmaterial unter Anwendung von selektiver Ätz- und Ätzstopptechnik;

Fig. 2 ein mikromechanisches Biegefedergelenk als Teilelement eines erfindungsgemäßen Biegefedergelenks;

Fig. 3 die Seiten-Schnittansicht eines mikromechanischen Biegefedergelenks erfindungsgemäßer Art;

Fig. 4 die perspektivische Teilschnittdarstellung eines mikromechanischen Biegefedergelenks erfindungsgemäßer Art;

Fig. 5 die Draufsicht auf das Biegefedergelenk gemäß Fig. 4; und

Fig. 6 ein Pendel in mikromechanischer Technik, bei dem zwei Biegefedergelenke erfindungsgemäßer Art zur Pendelaufhängung verwendet sind.

Die Fig. 2 zeigt zum besseren Verständnis der Erfindung ein Teilelement eines Biegefedergelenks erfindungsgemäßer Art, das aus einem Wafermaterial, beispielsweise einem Siliciumeinkristallmaterial, durch doppelseitiges Einbringen zweier V-förmiger Nuten 2 und 3 durch eine dazwischen stehengelassene schräge Wandfläche bzw. Trennfläche oder Blattfeuerelement 20 gebildet worden ist. Bei Anwendung selektiver Ätztechnik lassen sich solche V-förmigen Nuten 2, 3, wie erwähnt, durch geeignete Wahl der Lage der Kristallachsen des Siliciumeinkristalls relativ zur Waferfläche herstellen. Wie dargestellt, sind die beiden V-förmigen Nuten 2, 3 hinsichtlich ihrer Querrichtungen versetzt und die das eigentliche Biegefedergelenk bildende Wandfläche 20 bleibt bei geeigneter Anwendung einer bekannten Ätzstopptechnik stehen. Die Dicke der Wandfläche 20 (der Blattfeder) wird z.B. durch zeitrichtiges Dotieren mit Bor von einer Blattseite her bestimmt und kann sehr genau toleriert werden. Die Dotierung schräger Flächen kann z.B., wie dem Fachmann an sich bekannt, durch Ionenimplantation erfolgen.

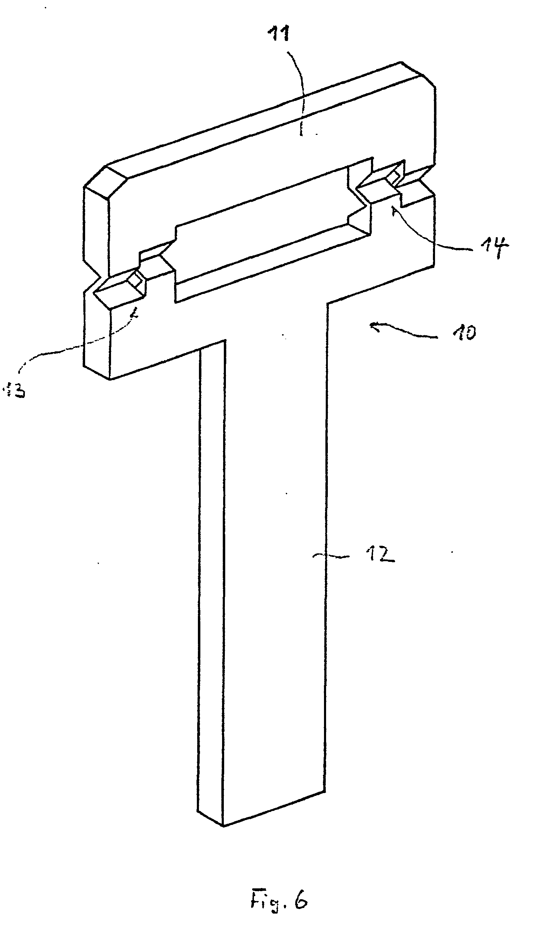

Die Fig. 3 bis 6 zeigen ein grundlegendes Ausführungsbeispiel eines erfindungsgemäßen Biegefedergelenks mit zwei sich kreuzenden, Blattfedern bildenden Trennwänden 20 bzw. 21 zwischen paarweisen Nuten 2 bzw. 4 einerseits und 3 bzw. 5 andererseits. Die V-förmigen Nuten 3, 5 sind in Querrichtung gegeneinander versetzt von der einen Hauptfläche (Oberseite) des Wafers 1 und die gegenüberliegenden, wiederum gegeneinander um den gleichen Abstandsbetrag in Querrichtung versetzten V-förmigen Nuten 2, 4 sind von der anderen Hauptfläche (Unterseite) durch selektives anisotropes Ätzen in den Wafer 1 eingebracht, wobei unter Anwendung der erwähnten Ätzstopptechnik zwischen den Nuten 2, 3 die Wandfläche 20 (Blattfeder) und zwischen den Nuten 4, 5 die Wandfläche 21 (Blattfeder) stehenbleiben. Die beiden sich kreuzenden Blattfedern bilden gemeinsam ein Biegefedergelenk.

Aufgrund der Lage der Kristallachsen entstehen im Kreuzungsbereich der beiden sich kreuzenden Blattfedern Schrägflächen 7 bzw. 8. Am Überkreuzungspunkt 6 besteht je nach Wahl der Ätzmaskenabmessungen eine Verbindung der beiden Wandflächen 20, 21, also der beiden sich kreuzenden Blattfedern, oder es läßt sich eine vollständige Trennung der Blattfedern oder Federblätter erreichen. Die Schwierigkeit der Trennung beider Blattfedern, die sich aus der ätztechnisch und kristallphysikalisch bedingten Schräglage der beiden Schrägflächen 7, 8 ergibt, kann gemäß der Erfindung durch eine spezielle Abmessung der Ätzmaskenform, wie sie aus den Fig. 5 und 6 zu ersehen ist, umgangen werden. Eine andere bevorzugte Möglichkeit zur Trennung beider Blattfedern ist durch Anwendung einer an sich bekannten Ionenätztechnik gegeben.

In Fig. 4 ist für eine die V-förmigen Nuten bildende Schrägfläche ein Winkel θ = 54,74° angegeben, der kristallphysikalisch vorgegeben ist und für alle dargestellten Ausführungsbeispiele (auch für Fig. 1) gilt.

Weiterhin ist in Fig. 2 mit Bezugshinweis 25 eine eingebrachte Bordotierung durch gestrichelte Linie verdeutlicht, mit der sich die Nuttiefe der Nuten 2 bzw. 3 sehr gut wiederholbar regeln läßt. Entsprechende Dotierungsschichtmarkierungen sind in Fig. 4 mit Bezugshinweis 25 bzw. 26 angegeben. Die Schrägflächen 7, 8 (vgl. Fig. 4 und 5) bleiben undotiert (ätztechnisch weich), damit die ätztechnische Trennung der beiden Trennwände 20, 21 (Federblätter) erreicht wird. Am vorteilhaftesten erscheint derzeit zur Trennung der Federblätter ein in Fig. 5 senkrechter Schnitt mittels Ionenätztechnik.

Die Fig. 6 zeigt ein sehr vorteilhaftes Anwendungsbeispiel für ein Biegefedergelenk in Anwendung auf ein mikromechanisches Pendel. Die Pendelvorrichtung insgesamt ist mit Bezugshinweis 10 gekennzeichnet. Das eigentliche T-förmige Pendel 12 ist über zwei Kreuzfeder-Pendelgelenke 13, 14 unmittelbar mit einer im dargestellten Beispiel balkenförmig ausgeführten Pendelaufhängung 11 verbunden. Die beiden Kreuzfeder-Pendelgelenke 13, 14 sind voneinander beabstandet und im dargestellten Beispiel am jeweiligen distalen Ende des Querbalkens des T-förmigen Pendels 12 angeordnet.

Diese Aufhängung des T-förmigen Pendels 12 über zwei Kreuzfeder-Pendelgelenke 13, 14 hat den Vorteil, daß anders als bei Verwendung nur eines Biegefedergelenkes eine mögliche Unsymmetrie wegen der Lage der beiden gekreuzten Blattfedern in Pendeldrehachsenrichtung aufgehoben wird, wenn zwei (oder mehrere) Paare spiegelbildlich zueinander positionierter, in Drehachsenrichtung nebeneinanderliegender Kreuzfeder-Pendelgelenke verwendet werden.

Diese Aufhängung an zwei oder mehreren parallelen Kreuzfedergelenken läßt sich einschließlich des Pendels 12 und der Pendelaufhängung 11 aus ein und demselben Siliciumwafer in einer Arbeitsgangabfolge als zusammenhängendes elastisches Pendelgelenk herstellen. die Kreuzfeder-Pendelgelenke 13, 14 sind ersichtlicherweise bezüglich der Pendelrichtung spiegelbildlich zueinander positioniert.

Eine derartige Pendelaufhängung mittels zweier spiegelbildlich zueinander angeordneter Biegefedergelenke hat gegenüber allen bisher bekannten Pendelaufhängungen den Vorteil, daß einerseits die Eigenfrequenz der Winkelauslenkung sehr niedrig liegt, andererseits aber eine sehr hohe translatorische Eigenfrequenz gewährleistet werden kann. Dabei unterliegen die sich kreuzenden Blattfedern translatorischer Beanspruchung und sind paarweise auf Zug und Druck beansprucht. So liegt, um nur ein Beispiel zu geben, die translatorische Eigenfrequenz bei Blattfederelementen herkömmlicher Art bei etwa 5 kHz, während die entsprechenden typischen Werte bei einem Pendel mit Biegefedergelenken bei 20 kHz oder höher liegt. Überdies zeichnen sich die Federelemente dadurch aus, daß sie praktisch hysteresefrei oder mindestens im Vergleich zu Biegefedergelenken herkömmlicher Bauart sehr hysteresearm sind.

**Patentansprüche**

1. Mikromechanisches Pendel aus selektiv geätztem Siliciumwafermaterial, mit einem Biegefedergelenk, dadurch gekennzeichnet, daß das Biegefedergelenk (13, 14) aus zwei nebeneinander angeordnete, gekreuzte und schräg zu den Hauptflächen des Wafers (1) verlaufende einstückig mit dem Pendel (10) aus dem Wafer (1) durch selektives Ätzen gewonnene Blattfederelemente (20, 21) besteht, deren jeweilige Dicke bestimmbar ist durch wenigstens von einer Seite der Blattfederelemente (20, 21) her eindotiertes Bor als Ätz-Stoppmittel.

2. Verfahren zur Herstellung eines mikromechanischen Pendels mit Biegefedergelenk aus einem Siliciumwafer mittels selektiver Ätztechnik, gekennzeichnet, durch die Verfahrensschritte:
 – anisotropes, selektives Herausätzen von je zwei nebeneinander angeordneten, jedoch in Querrichtung gegeneinander versetzten V-förmigen Nuten (2, 4 bzw. 3, 5) in beiden Hauptflächen des Wafers (1) derart, daß die durch das Ätzen entstehenden Trennwände zwischen den Nuten (2, 4) auf der einen und den Nuten (3, 5) auf der anderen Seite des Wafers (1) sich kreuzenden Blattfederelemente (20, 21) bilden,
 – Beenden des anisotropen Ätzvorgangs bei Erreichen einer mit Bor dotierten Ätz-Stoppschicht,
 – Trennen der sich kreuzenden Blattfederelemente (20, 21) in ihrem Kreuzungspunkt (6) durch Wahl der Ätzform und anisotropes Ätzen.

**Claims**

1. Micromechanical pendulum of selectively etched silicon wafer material, having a bending spring joint, characterized in that the bending spring joint (13, 14) consists of two leaf spring elements (20, 21) arranged alongside each other, crossing and running obliquely with respect to the main areas of the wafer (1) and obtained in one piece with the pendulum (10) from the wafer (1) by selective etching, the thickness of each of which elements can be determined by using boron as etching resist agent doped into at least one side of the leaf spring elements (20, 21).

2. Process for the production of a micromechanical pendulum with bending spring joint, from a silicon wafer by means of a selective etching technique, characterized by the process steps:
 – anisotropic, selective etching-out in both main areas of the wafer (1) of two V-shaped grooves in each case (2, 4 and 3, 5 respectively), arranged alongside each other but mutually offset in the transverse direction, in such a way that the partitions between the grooves (2, 4) on the one side and the grooves (3, 5) on the other side of the wafer (1) produced by etching form crossing leaf spring elements (20, 21),

 – ending of the anisotropic etching operation on reaching an etching resist layer doped with boron,
 – separating the crossing leaf spring elements (20, 21) at their crossing point (6) by choice of the etch mask and anisotropic etching.

**Revendications**

1. Pendule micromécanique réalisé à partir d'un matériau de tranche de silicium gravé sélectivement, comprenant une liaison pivotante à ressort, caractérisé en ce que la liaison pivotante à ressort (13, 14) se compose de deux éléments de lames de ressort (20, 21) juxtaposés, croisés, s'étendant en oblique par rapport aux surfaces principales de la tranche (1) et réalisés à partir de la tranche (1) par gravure sélective de façon à former une seule pièce avec le pendule (10), dont l'épaisseur respective peut être déterminée par le dopage avec du bore comme agent d'arrêt de gravure par au moins l'un des côtés des éléments de lames de ressort (20, 21).

2. Procédé de fabrication d'un pendule micromécanique avec liaison pivotante à ressort à partir d'une tranche de silicium par gravure sélective, caractérisé par les opérations suivantes:
 – gravure sélective anisotrope de respectivement deux rainures en V (2, 4 et respectivement 3, 5) juxtaposées mais décalées l'une par rapport à l'autre dans le sens transversal dans les deux surfaces principales de la tranche (1) de telle façon que les cloisons entre les rainures (2, 4) sur l'une des faces de la tranche (1) et les rainures (3, 5) sur l'autre face de la tranche formées par la gravure constituent des éléments de lames de ressort (20, 21) qui se croisent;
 – l'arrêt de la gravure anisotrope lors de l'atteinte d'une couche d'arrêt de gravure dopée avec du bore;
 – séparation à leur point de jonction (6) par le choix de la forme de gravure et la gravure anisotrope.

FIG. 1

FIG. 2

FIG. 3

FIG. 5

FIG. 4

Fig. 6